# EUROPEAN PATENT APPLICATION

(11) **EP 4 650 740 A1**
(43) Date of publication of application: **19.11.2025**
(21) Application number: 25169560.7
(22) Date of filing: 09.04.2025
(51) Int. Cl.: G01L 9/00

(54) **PIEZORESISTIVE PRESSURE SENSOR**

(30) Priority: 13.05.2024 US 202418662649
(71) Applicant: Honeywell International Inc., Charlotte, NC 28202 (US)
(72) Inventor: WANG, Yong-Fa, Charlotte, 28202 (US); PHAM, Thuy-Doan, Charlotte, 28202 (US)
(74) Representative: Haseltine Lake Kempner LLP

(57) **Abstract**

A device comprising a piezoresistive pressure sensor is provided. The pressure sensor may comprise at least one diaphragm of a first thickness, surrounded by at least one second diaphragm of a second thickness, the second thickness being greater than the first thickness. The at least one diaphragm may be comprised of at least one irregular shape, wherein the at least one irregular shape includes two opposite substantially rounded corners and two opposite irregular corners. The irregular corners may comprise protruding pointed which comprise piezo-resistors. Opposite pairs of piezo-resistors may define a Wheatstone bridge.

## Description

### FIELD OF THE INVENTION

Embodiments of the present disclosure generally relate to devices comprising piezoresistive pressure sensors.

### BACKGROUND

There are many different devices for detecting pressures of various media. Some of these devices are used in the medical field, in some examples. Applicant has identified many technical challenges and difficulties associated with such devices for detecting bubbles and/or blockages in fluids. Through applied effort, ingenuity, and innovation, many of these identified problems have been solved by developing solutions that are included in embodiments of the present disclosure, many examples of which are described in detail herein.

### BRIEF SUMMARY

Various example embodiments described herein relate to devices comprising piezoresistive pressure sensors.

In accordance with various embodiments of the present disclosure, a device is provided. In some embodiments, the device comprises a pressure sensor. In some embodiments, the pressure sensor comprises: at least one first diaphragm of a first thickness, surrounded by at least one second diaphragm of a second thickness, wherein the at least one second diaphragm is comprised of two or more layers of materials having thicknesses selected to achieve substantially zero effective stress, wherein the second thickness is greater than the first thickness, and wherein: the at least one first diaphragm is comprised of at least one irregular shape, wherein the at least one irregular shape includes two opposite substantially rounded corners and two opposite irregular corners, wherein the two opposite irregular corners comprise protruding pointed regions that comprise piezo-resistors that define a Wheatstone bridge.

In some embodiments, the device further comprises four first diaphragms of the first thickness.

In some embodiments, the device further comprises four irregular shapes.

In some embodiments, the device further comprises a substrate defining a substantially rounded hole.

In some embodiments, the substrate is comprised of glass.

In some embodiments, opposite pairs of proximate piezo-resistors are configured to be displaced in either a first direction or a second direction, the first direction being opposite the second direction, based on an applied pressure.

In some embodiments, the displacement defines the Wheatstone bridge, which is configured to output a voltage proportional to the displacement of the piezo-resistors.

In accordance with various embodiments of the present disclosure, a pressure sensor is provided. In some embodiments, the pressure sensor comprises: at least one first diaphragm of a first thickness, surrounded by at least one second diaphragm of a second thickness, wherein the at least one second diaphragm is comprised of two or more layers of materials having thicknesses selected to achieve substantially zero effective stress, wherein the second thickness is greater than the first thickness, and wherein: the at least one first diaphragm is comprised of at least one irregular shape, wherein the at least one irregular shape includes two opposite substantially rounded corners and two opposite irregular corners, wherein the two opposite irregular corners comprise protruding pointed regions that comprise piezo-resistors that define a Wheatstone bridge.

In some embodiments, the device further comprises four first diaphragms of the first thickness.

In some embodiments, the device further comprises four irregular shapes.

In some embodiments, the device further comprises a substrate defining a substantially rounded hole.

In some embodiments, the substrate is comprised of glass.

In some embodiments, opposite pairs of proximate piezo-resistors are configured to be displaced in either a first direction or a second direction, the first direction being opposite the second direction, based on an applied pressure.

In some embodiments, the displacement defines the Wheatstone bridge, which is configured to output a voltage proportional to the displacement of the piezo-resistors.

In accordance with various embodiments of the present disclosure, a system is provided. In some embodiments, the system comprises a pressure sensor comprising at least one first diaphragm of a first thickness, surrounded by at least one second diaphragm of a second thickness, wherein the at least one second diaphragm is comprised of two or more layers of materials having thicknesses selected to achieve substantially zero effective stress, wherein the second thickness is greater than the first thickness, and wherein the at least one first diaphragm is comprised of at least one irregular shape, wherein the at least one irregular shape includes two opposite substantially rounded corners and two opposite irregular corners, wherein the two opposite irregular corners comprise protruding pointed regions that comprise piezo-resistors that define a Wheatstone bridge. In some embodiments, the system comprises a device configured to receive information indicating at least one pressure measured by the pressure sensor.

In some embodiments, the pressure sensor further comprises four first diaphragms of the first thickness.

In some embodiments, the pressure sensor further comprises four irregular squares.

In some embodiments, the pressure sensor further comprises a substrate defining a substantially round hole, wherein the substrate is disposed opposite to the at least one first diaphragm.

In some embodiments, opposite pairs of proximate piezo-resistors are configured to be displaced in either a first direction or a second direction, the first direction being opposite the second direction, based on an applied pressure.

In some embodiments, the displacement defines the Wheatstone bridge, which is configured to output a voltage proportional to the displacement of the piezo-resistors.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A is a perspective view of a "top surface" of a piezoresistive pressure sensor;
FIG. 1B is a perspective view of a "bottom surface" of a piezoresistive pressure sensor;
FIG. 2 is a perspective view and a closeup view at least a portion of a piezoresistive pressure sensor; and
FIG. 3 is a top-down view and closeup views of piezo-resistors of a piezoresistive pressure sensor, in accordance with some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electrically coupled," "electrically coupling," "electrically couple," "electrically connected," "electrically connecting," "electrically connect," "in communication with," or "in electronic communication with" in the present disclosure refers to two or more elements or components being connected through wired means and/or wireless means, such that signals, electrical voltage/current, data and/or information may be transmitted to and/or received from these elements or components.

The term "in fluid communication with" in the present disclosure refers to two or more elements or components being connected through one or more paths or pathways, such that a fluid or other flowing media may be input to and/or output from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

The term "sensor" refers to a component that may detect, measure, and/or identify any one or more attributes or characteristics of an environment or media, including but not limited to pressure(s).

In some examples, conventional pressure sensors and fabrication thereof are limited by various features. For example, fabricating pressure sensors with very thin diaphragms (e.g., on the order of several microns in thickness) is difficult when using conventional methods. In some examples, conventional pressure sensors have large initial voltage offsets, even when no pressure is applied.

Embodiments of the present disclosure, in some examples, provide devices comprising piezoresistive pressure sensors and, in some examples, piezoresistive ultra-sensitive pressure sensors.

Example embodiments of the devices described herein may include devices comprising pressure sensors. Example embodiments of the devices described herein may include a pressure sensor, wherein the pressure sensor comprises at least one first diaphragm of a first thickness, surrounded by at least one second diaphragm of a second thickness, wherein the at least one second diaphragm is comprised of two or more layers of materials having thicknesses selected to achieve substantially zero effective stress, wherein the second thickness is greater than the first thickness. In some examples, the at least one diaphragm is comprised of at least one irregular shape (e.g., irregular square, irregular rectangle, and/or other shape), wherein the at least one irregular shape includes two opposite substantially rounded corners and two opposite irregular corners, wherein the two opposite irregular corners comprise protruding pointed regions. In some examples, the protruding pointed regions comprise piezo-resistors, and opposite pairs of piezo-resistors define a Wheatstone bridge.

Example embodiments of the present disclosure, in some examples, provide for pressure sensors and/or devices comprising pressure sensors having one or more first diaphragms of a first thickness and one or more second diaphragms (e.g., surrounding regions, connecting beams and/or surrounding edges, etc.) of a second thickness, wherein the second thickness is greater than the first thickness. In some examples, the one or more second diaphragms are comprised of two or more layers of materials having thicknesses selected to achieve substantially zero effective stress. In some examples, the diaphragms are thin (e.g., 5 microns, 5 microns or less, 3 microns or less, etc.). In some examples, the one or more second diaphragms are thin and/or thicker than the first diaphragms (e.g., 10 microns, 10 microns or less, 6 microns or less, etc.). In some examples, the diaphragms are of irregular shapes (e.g., irregular squares, irregular rectangles, and/or other shapes) with piezo-resistors at half or two of their corners. Example embodiments of the present disclosure thus provide for piezoresistive pressure sensors, in some examples. Such piezoresistive pressure sensors may be used in medical applications, in some examples. For example, such piezoresistive pressure sensors may detect pressure imparted by, for example, water, such as an inch of water, an inch or less of water, and/or the like (e.g., pressures on the order of 250 Pa, 250 Pa, 250 Pa or less, 250 Pa or more, etc.).

As described herein, embodiments of the present disclosure, in some examples, provide devices for determining pressures of various media. Embodiments of the present disclosure, in some examples, provide ultra-sensitive pressure sensors which are more sensitive than conventional pressure sensors. Embodiments of the present disclosure, in some examples, provide for pressure sensor having a nearly negligible initial voltage offset (e.g., if there is no applied and/or detected pressure, the pressure sensor outputs nearly zero voltage).

To address challenges and limitations associated with devices for determining the pressures of various media, various examples of the present disclosure may be provided. For example, various examples of the present disclosure may provide example devices for sensing pressure, associated sensors, and associated methods.

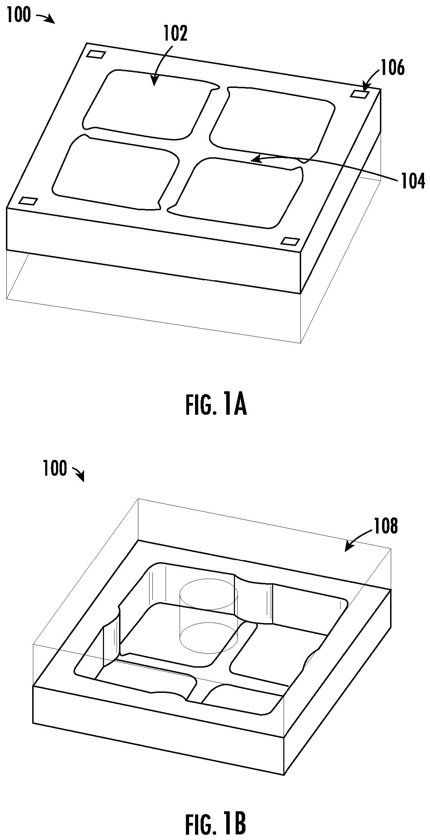

FIGS. 1A-1B are perspective views of a piezoresistive pressure sensor. Referring now to FIG. 1A, a perspective view of a "top surface" of a piezoresistive pressure sensor 100 is provided. The piezoresistive pressure sensor 100 may be an ultra-sensitive piezoresistive pressure sensor. The piezoresistive pressure sensor 100 comprises at least one first diaphragm 102, at least one second diaphragm 104, at least one electrical contact 106, and/or a substrate 108 (further described with respect to FIG. 1B). The "top surface" may be defined as the surface having the at least one diaphragm 102, wherein the at least one diaphragm is exposed. The "bottom surface" may be defined as the surface having the substrate 108.

The piezoresistive pressure sensor 100 may comprise at least one first diaphragm 102 of a first thickness, surrounded by at least one second diaphragm 104 of a second thickness (e.g., comprising regions of a second thickness, the second thickness being greater than the first thickness). The at least one second diaphragm 104 may be comprised of two or more layers of materials having thicknesses selected to achieve substantially zero effective stress. The at least one first diaphragm 102 may be comprised of at least one irregular shape, wherein the at least one irregular shape includes two opposite substantially rounded corners and two opposite irregular corners, wherein the irregular corners comprise protruding pointed regions. The protruding pointed regions of the at least one first diaphragm 102 may comprise piezo-resistors. Opposite pairs of piezo-resistors may define a Wheatstone bridge, such that when pressure is applied, two opposite piezo-resistors may be displaced in a first direction and another two opposite piezo-resistors may be displaced in a second direction, the second direction being opposite the first direction, and an output voltage is generated.

In some examples, the at least one first diaphragm 102 comprises four diaphragms (e.g., as shown in FIG. 1A). In some examples, the four diaphragms are comprised of irregular shapes (e.g., irregular squares, irregular rectangles, and/or other shapes). The irregular shapes may have two opposite substantially rounded corners and two opposite irregular corners. In some examples, the four diaphragms each comprise a pair of irregular opposite corners having protruding pointed regions. The protruding pointed regions may comprise high-stress piezo-resistors. For example, if a pressure difference is sensed by the pressure sensor (e.g., a "top surface" and a "bottom surface" of the pressure sensor sense different pressures), each pair of proximate irregular corners will be displaced in either a first direction or a second direction (e.g., where opposite pairs of irregular corners are displaced in the same direction as one another). This displacement defines a Wheatstone bridge, which will output a voltage proportional the displacement of the piezo-resistors.

The at least one diaphragm 102 may be comprised of bare silicon. The at least one first diaphragm 102 may be substantially cleared of oxide film (e.g., which may be deposited during the fabrication process). The at least one diaphragm 102 may be of a first thickness. The at least one second diaphragm 104 may be of a second thickness. The second thickness may be greater than the first thickness. For example, the first thickness may be approximately 3-5 microns (e.g., 5 microns, 5 microns or less, 3 microns, etc.), and/or the second thickness may be approximately 6-10 microns (e.g., 10 microns, 10 microns or less, 6 microns, etc.).

In some examples, the at least one second diaphragm 104 is comprised of one or more layers. In some examples, the at least one second diaphragm 104 is comprised of two or more layers. In some examples, the at least one second diaphragm 104 is comprised of a first layer of silicon comprising piezoresistive regions, a layer of oxide, and/or a second layer of silicon, wherein the second layer of silicon is thicker than the first layer of silicon. In some examples, the at least one second diaphragm 104 is comprised of a silicon oxide/silicon nitride stack, wherein the silicon oxide layer has compressive stress and the silicon nitride layer has tensile stress; based on selecting predetermined thicknesses of the silicon oxide and/or silicon nitride, near-zero "effective stress" can be achieved in the stack. In some examples, the at least one second diaphragm 104 is comprised of a silicon oxide/polysilicon/silicon nitride stack, wherein the polysilicon (e.g., doped polysilicon) acts as an electrical field protection plate. The thicknesses of the silicon oxide, polysilicon, and/or silicon nitride may be selected to yield near-zero "effective stress" on the silicon substrate. In some examples, the at least one second diaphragm 104 comprises regions which surround the irregular shapes of the at least one diaphragm 102.

In some examples, the at least one electrical contact 106 is a metal contact. For example, the at least one electrical contact 106 may be comprised of a first layer of titanium tungsten (TiW) and/or a layer of gold (Au), forming at least one TiW/Au contact. In some examples, the at least one electrical contact 106 is used to transmit pressure data from the pressure sensor to at least one other device.

In some examples, a device may comprise a pressure sensor such as the piezoresistive pressure sensor 100. A device comprising a piezoresistive pressure sensor may be used in medical applications to sense the pressure(s) of various media, such as fluids.

Referring now to FIG. 1B, a perspective view of a "bottom surface" of the piezoresistive pressure sensor 100 is provided. The piezoresistive pressure sensor 100 comprises the substrate 108. The substrate 108 may be comprised of a substrate (e.g., a plate and/or other object). The substrate may be comprised of glass, silicon, materials having a substantially similar thermal expansion rate as silicon, and/or other materials. The substrate 108 may define a substantially round hole, for example, wherein the substantially round hole is located at approximately the center of the substrate 108. The substrate 108 may be disposed opposite to the at least one first diaphragm. The substantially round hole of the substrate 108 may expose the "bottom surface" of the piezoresistive pressure sensor 100 to a "reference pressure" (e.g., a pressure outside of the pressure sensor, such as ambient pressure).

The piezoresistive pressure sensor 100 may be comprised by a system further comprising another device configured to receive information indicating at least one pressure measured by the piezoresistive pressure sensor 100. The another device may be coupled to the piezoresistive pressure sensor 100 via the at least one electrical contact 106 (e.g., via wire bonding to the at least one electrical contact 106).

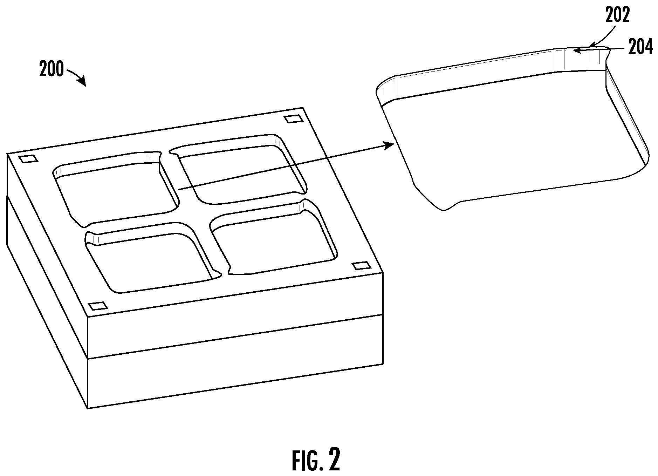

Referring now to FIG. 2, a perspective view and a closeup view of at least a portion of a piezoresistive pressure sensor are provided. FIG. 2 shows a perspective view 200 of a piezoresistive pressure sensor. The piezoresistive pressure sensor of view 200 may be the piezoresistive pressure sensor 100. The closeup view of at least a portion of the piezoresistive pressure sensor shows a cross-section, for example, of the at least one second diaphragm 104. The cross-sectional view of the at least one second diaphragm 104 includes a silicon oxide/silicon nitride stack, wherein the silicon oxide layer is denoted by reference numeral 204 and the silicon nitride layer is denoted by reference numeral 202. The silicon nitride layer 202 (e.g., silicon nitride film) may have tensile stress. The silicon oxide layer 204 (e.g., silicon oxide film) may have compressive stress. In combination, the silicon oxide/silicon nitride stack may have near-zero "effective stress". The cross-sectional view of the at least one second diaphragm 104 may include two or more layers, for example, such as a silicon oxide/polysilicon/silicon nitride stack, wherein the polysilicon (e.g., doped polysilicon) acts as an electrical field protection plate. The thicknesses of the silicon oxide, polysilicon, and/or silicon nitride may be selected to yield near-zero "effective stress" on the silicon substrate.

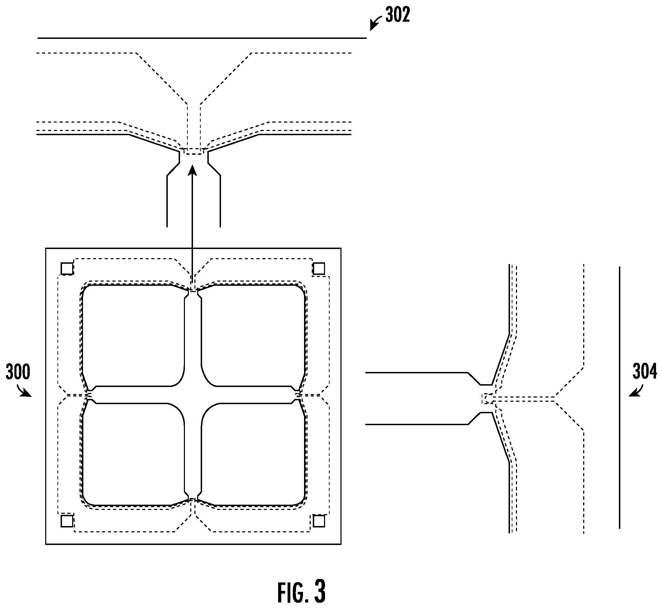

Referring now to FIG. 3, a top-down view and closeup views of piezo-resistors of a piezoresistive pressure sensor are provided. Referring now to the top-down view 300, suppose that pairs of irregular corners in the image can be described as "top", "bottom", "left", and "right", according to their orientation in the exemplary image. The top and bottom piezo-resistors may be substantially parallel to the edges of the at least one diaphragm 102. The left and right piezo-resistors may be substantially perpendicular to the edges of the at least one diaphragm 102. The closeup view 302 shows how the piezo-resistor at the top (and/or bottom) may be substantially parallel to the edges of the at least one diaphragm 102. The closeup view304 shows how the piezo-resistor at the right (and/or left) may be substantially perpendicular to the edges of the at least one diaphragm 102. The piezo-resistors may be lightly-doped p-type piezo-resistors. The lightly doped p-type piezo-resistors may be substantially in the <110> direction. The silicon of the at least one diaphragm 102 may be substantially in the <110> direction.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A device comprising:
a pressure sensor, the pressure sensor comprising:
at least one first diaphragm of a first thickness, surrounded by at least one second diaphragm of a second thickness, wherein the at least one second diaphragm is comprised of two or more layers of materials having thicknesses selected to achieve substantially zero effective stress, wherein the second thickness is greater than the first thickness, and wherein:
the at least one first diaphragm is comprised of at least one irregular shape,
wherein the at least one irregular shape includes two opposite substantially rounded corners and two opposite irregular corners, wherein the two opposite irregular corners comprise protruding pointed regions that comprise piezo-resistors that define a Wheatstone bridge.

2. The device of claim 1, further comprising four first diaphragms of the first thickness.

3. The device of any of claims 1 or 2, further comprising four irregular squares.

4. The device of any of claims 1 to 3, further comprising a substrate defining a substantially round hole, wherein the substrate is disposed opposite to the at least one first diaphragm.

5. The device of any of claims 1 to 4, wherein the substrate is comprised of glass.

6. The device of any of claims 1 to 5, wherein opposite pairs of proximate piezo-resistors are configured to be displaced in either a first direction or a second direction, the first direction being opposite the second direction, based on an applied pressure.

7. The device of any of claims 1 to 6, wherein the displacement defines the Wheatstone bridge, which is configured to output a voltage proportional to the displacement of the piezo-resistors.

8. A system comprising:
a pressure sensor comprising:
at least one first diaphragm of a first thickness, surrounded by at least one second diaphragm of a second thickness, wherein the at least one second diaphragm is comprised of two or more layers of materials having thicknesses selected to achieve substantially zero effective stress, wherein the second thickness is greater than the first thickness, and wherein:
the at least one first diaphragm is comprised of at least one irregular shape,
wherein the at least one irregular shape includes two opposite substantially rounded corners and two opposite irregular corners, wherein the two opposite irregular corners comprise protruding pointed regions that comprise piezo-resistors that define a Wheatstone bridge; and
a device configured to receive information indicating at least one pressure measured by the pressure sensor.

9. The system of claim 8, wherein the pressure sensor further comprises four first diaphragms of the first thickness.

10. The system of any of claims 8 or 9, wherein the pressure sensor further comprises four irregular squares.

11. The system of any of claims 8 to 10, wherein the pressure sensor further comprises a substrate defining a substantially round hole, wherein the substrate is disposed opposite to the at least one first diaphragm.

12. The system of any of claims 8 to 11**,** wherein opposite pairs of proximate piezo-resistors are configured to be displaced in either a first direction or a second direction, the first direction being opposite the second direction, based on an applied pressure.

13. The system of any of claims 8 to 12, wherein the displacement defines the Wheatstone bridge, which is configured to output a voltage proportional to the displacement of the piezo-resistors.

14. A method comprising:
fabricating a device comprising a pressure sensor, the pressure sensor comprising:
at least one first diaphragm of a first thickness, surrounded by at least one second diaphragm of a second thickness, wherein the at least one second diaphragm is comprised of two or more layers of materials having thicknesses selected to achieve substantially zero effective stress, wherein the second thickness is greater than the first thickness, and wherein:
the at least one first diaphragm is comprised of at least one irregular shape,
wherein the at least one irregular shape includes two opposite substantially rounded corners and two opposite irregular corners, wherein the two opposite irregular corners comprise protruding pointed regions that comprise piezo-resistors that define a Wheatstone bridge.

15. The method of claim 14, further comprising:
configuring a substrate to define a substantially round hole; and
disposing the substrate opposite the at least one first diaphragm.
